# EUROPEAN PATENT APPLICATION

(11) **EP 3 032 417 A1**
(43) Date of publication of application: **15.06.2016**
(21) Application number: 14306991.2
(22) Date of filing: 10.12.2014
(51) Int. Cl.: G06F 9/50

(54) **Cloud orchestration and placement using historical data**

(71) Applicant: Alcatel Lucent, 92100 Boulogne-Billancourt (FR)
(72) Inventor: Vermoesen, Luc, 2018 Antwerp (BE); Vandeputte, Frederik, 2018 Antwerp (BE)
(74) Representative: Jacobs, Bart

(57) **Abstract**

A method and system for placing a user application on a host among a plurality of hosts, said hosts being grouped into a plurality of host types, each host comprising a plurality of different resources, which comprises a benchmarking process and a determination of relative weights of resources between host types and relative weights of resource for an application, and uses these weights in searching for a host on which to place of the user application. A database is populated with these weights and other data about hosts, their currently available resources, applications, the performance of applications on certain hosts, and/or which applications are running on which hosts, and this database may be updated when a user application is executed on a host type, thus providing a dynamic system where placement may improve over time.

## Description

### Field of the invention

The invention relates to a method and system for placing a user application on a host among a plurality of hosts, said hosts being grouped into a plurality of host types, each host comprising a plurality of different resources.

### Background

Increasingly, applications/services are no longer executed locally but are executed in the cloud. Cloud processing has many advantages, among them that, as resources are shared, they can be used more effectively, that environmental impact can be reduced, and that server maintenance can be centralized.

A problem in cloud computing is how to optimally allocate the various applications/services onto the different types of servers/hosts which may offer preferential benefits for specific applications. Applications and or services will hereafter, for the sake of brevity, referred to simply as applications. Servers and hosts, as well as their operating environment and configuration settings will hereafter be referred to as hosts.

Applications can take many different forms: they may be regular executables or packaged applications, e.g. in virtual machines or containers. A datacenter or " cloud" is composed of many different kinds of hosts, which range from very advanced multi-core hosts with strong graphics processing units (GPUs) or specific network interfaces to either basic or low power hosts with lower-performance but higher efficiency. They may have different hardware as well as different operating software and different configuration settings. Likewise, application resource requirements may vary significantly. For instance, some applications may necessitate good graphic or network capabilities while others may prioritize good memory input-output or reliability. Further requirements may come from the operator asking for the application to be executed, who may for instance have a preference for the cheapest or the most reliable option, depending on application and other factors.

Within the context of the present application, cloud orchestration is the automated arrangement, coordination, and management of complex computer systems, middleware, and services. Cloud placement, which is the general term for the determination of how applications are mapped onto hosts, have a significant impact on the total cost of ownership of a cloud as well as operational aspects such as reliability, availability etc. of the cloud. It is therefore desirable to optimize cloud placement.

Existing systems for cloud orchestration and placement tend to use algorithms that take into account only certain selection criteria relating to the cloud itself, such as the system load currently experienced by the hosts, sometimes referred to as server occupancy, and/or network bandwidth consumption of hosts and in a datacenter.

These algorithms tend to not take into account just how different the capabilities and behaviors of the various hosts can be, both in terms of computing power, network capabilities, local and remote storage, graphics processing units (GPUs), presence of various hardware accelerators, FPGA's, motherboard topology, interconnectedness as well as specific operating environment configuration parameter settings, etc. Notably, these algorithms also do not take into account how compatible a certain application and a certain host are as some applications perform better on certain types of hardware, nor do they factor in how the concurrent execution of several applications on a single host may affect performance and host utilization.

In the prior art, accounting for this affinity is handled in a fairly static manner by always allocating a specific application onto a pre-selected host, this as a result of performance testing done in advance of the first placement of a certain application. Hardware performance counters and other operating system event information are factors that may serve as input for this performance testing and evaluation.

An application affinity towards a certain host and its operation environment and its configuration is mostly determined by tuning the application's performance on a specific hardware platform that has the required engineering specifications. An intense tuning cycle for application and host ensures optimal affinity of the application towards that host. In cloud terms, this mostly leads to suboptimal cloud resource usage due to pre-reservation of hosts for specific applications.

One of the reasons these factors are usually not taken into account may be that the number of possible hardware performance counters and/or other metrics related to operating system events may be quite large, up to several hundred. These factors offer information on resource consumption and provide information related to how a particular resource is being used.

Ideally, the application would be assigned to the host on which it may run optimally, which may vary from moment to moment for instance depending on the other applications being executed at that time on the intended host. Finding this optimal allocation for applications based on these factors quickly becomes an NP-hard problem given the changing state of the cloud and its resource usage as well as the numerous externally imposed factors. Especially for short-lived and sparsely used applications, searching for this optimal solution may require time and resources which outweighs the potential gains.

It is therefore an object of the invention to propose a dynamic method of allocating applications to specific hosts, wherein a plurality of metrics relating to the performance of an application on a host are taken into account, where performance may be a purely technical term but also encompasses factors like user experience. Thereby, both functional and non-functional requirement, such as reliability, are improved upon in an automated manner.

### Summary

The invention relates to a method for placing a user application on a host among a plurality of hosts, said hosts being grouped into a plurality of host types, each host comprising a plurality of different resources, the method comprising:
a) for each of the resources separately, executing a benchmark application on at least one host of each of the host types, which benchmark application allows the performance of the benchmark application to be evaluated as a function of the availability of that resource;
b) for each resource and host type, determining a low-level metric that displays substantially similar behaviour to the performance of the corresponding benchmark application as a function of the availability of that resource, while not depending substantially on the remaining resources;
c) for each host type, determining the relative weight of each resource compared to that resource on other host types, wherein the relative weight indicates the strength of that host type with respect to that resource compared to the other host types;
d) for each resource and host type, storing in a database the correlation between that resource and the determined low-level metric, as well as the determined relative weights;
e) executing the user application on at least one host of a certain host type among the plurality of hosts;
f) perform a plurality of measurements of the performance of the user application during the execution(s) of the user application, wherein the availability of the resources varies between measurements and wherein the availability of each resource and/or the low-level metric corresponding to that resource is also measured;
g) determining for the user application the relative weight of each resource compared to the other resources, based on the measurements performed in step f) and the stored correlation between low-level metrics and resources for this host type, wherein the relative weight of each resource indicates the relative importance of that resource for the performance of the user application;
h) for each user application and host type, storing in the database the relative weight of each resource compared to the other resources for the user application;
i) for a subsequent placement of the user application, searching for a host among the plurality of hosts, based on, for each host type, the relative weight of each resource compared to that resource on other host types, and based on the relative weight of each resource compared to the other resources for the user application;
j) executing the user application on the host found under step i);
k) performing steps f)-j) during further subsequent execution of the user application.

In the above, a host type is a grouping of hosts with the same or very similar hardware as well as the same of very similar software. Both hardware and software may play a part in the performance of an application. In this entire document, an assessment of the performance of an application may comprise both the assessment of technical factors, such as speed and efficiency, as the assessment of user experience. Resources may comprise some or all of the various resources a host may make available to an application: examples are memory, bandwidth, storage, networking capabilities etc. In general, low-level metrics may be either hardware performance counter metrics, which are generally determined by the host hardware, kernel event metrics, and other possible metrics which reveal information about the run time behavior of the Operating System and how applications are being handled.

Steps a through d describe a benchmarking process, which will be illustrated later at the hand of the figures. One object of the benchmarking process is to establish the relative competencies of the various host types when it comes to certain resources. Another object is to establish which low-level metrics are a good representation of the performance of a benchmark application when it comes to a certain resource. Once this is established, these low-level metrics may be used to establish the value of a certain resource.

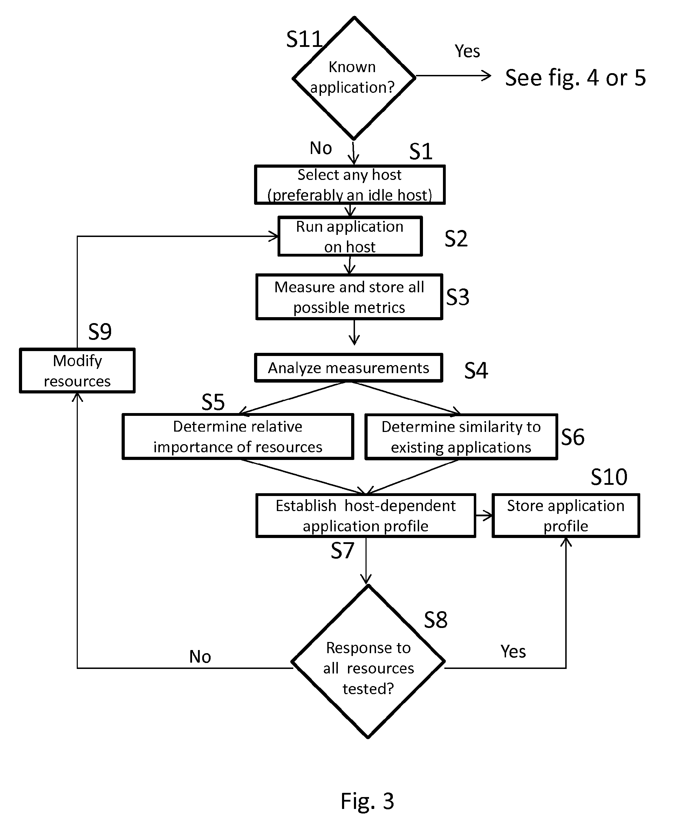

Steps e through h cover a first execution of a certain user application on a host type, a process which will later be illustrated in more detail at the hand of Fig. 3.

Steps i through k describe how placement of a user application on a host may be performed once the database is sufficiently populated.

The resources are preferably identical between the hosts, or at least shared in common between at least two host types, in order to make a comparison between hosts possible. In the search for a host among the plurality of hosts, based on, for each host type, the relative weight of each resource compared to that resource on other host types, host types for which there is no data concerning a certain resource may be disregarded.

In an exemplary method according to the invention, step g) may comprise approximating the measured performance of the user application as a function of the plurality of resources by a weighted sum of benchmark application performances for said plurality of resources, wherein the benchmark application performances are approximated by the measured corresponding low-level metrics as determined in step b); and determining weighting coefficients for each of the benchmark application performances using the measurements performed in step f); wherein said relative weights of each resource correspond to the determined weighting coefficients.

Once it is determined which low-level metrics are a good representation of the performance of an application or application health according to a certain resource, and a user application is executed which depends on the plurality of resources, the results from the benchmarking process may be used to determine the influence of the plurality of resources on application health. For instance, the application health of a certain user application may be determined to be highly dependent on the bandwidth made available to the application, whereas the storage made available to it may impact application health much less.

In an exemplary method according the invention, step f) may comprise a predefined limiting of the availability of one or more resources to the user application. This is because one or more resources may not vary sufficiently during the execution of the user application to be able to properly establish the relative weight of each resource when compared to the other resources. By limiting one or more resources, more measurement points may be acquired. One further possible advantage of this is that by limiting the availability of one or more resources to a user application, it may become possible to execute more applications on a host simultaneously.

In an exemplary method according to the invention, step i) may comprise placing the user application on a host of a host type on which the user application has not yet been placed. This may serve to further populate the database: it is generally advantageous to run each user application on a plurality of different host types to assemble more information, which may concern the user application itself, but which may also serve to provide more information about the host types.

In an exemplary method according to the invention, step i) comprises determining at least one resource among the plurality of resources for which the performance of the user application is relatively sensitive, and ranking the different host types based on the relative weight of such resource compared to that resource on other host types.

This procedure may determine a host on which the user application may perform especially well, as this will determine which hosts may provide the resource or resources which are most influential of the performance of the user application. For instance, if it has been determined that the application health of a user application is very dependent on the memory made available to it, it may perform better on a host of a host type of which it has been determined, in the benchmarking process and/or after further updates, that applications which highly depend on memory made available to them perform well on this host type.

In this exemplary method according to the invention, step i) may further comprise clustering the top-ranked host type(s) into a host cluster and searching for an available host in said host cluster for placing the user application.

While the performance of some user applications may depend in large part on just one resource, for many user applications more than one resource will have a significant affect on the performance of the application. The above-described step may therefore serve to refine the search for a host on which the user application may perform especially well. For instance, in the example above, bandwidth may be the next most important resource for the user application after memory. The host cluster selected for a high weight given to memory may now be subclustered by selecting the hosts in the host cluster which score above a certain threshold for bandwidth, thereby restricting the cluster to the hosts on which the user application may perform well.

In a further exemplary method according to the invention, said searching for an available host in said host cluster may comprise searching for a host which already has at least one other user application placed in order to obtain a dense packing of user applications.

Keeping hosts up an running costs energy, regardless of whether only one user application is currently being executed or whether many user applications are being executed simultaneously. It may therefore under many circumstances be advantageous to execute as many user applications on as few hosts as possible. One possible way of achieving this is to search for hosts on which at least one other user application has been placed already.

In an exemplary method according to the invention, step i) may comprise, if the user application has not yet been placed on any host of a given host type, using the relative weight of each resource compared to the other resources for the user application as determined for a host of a different host type on which the user application has been placed.

In general, the relative weight of each resource compared to the other resource for a certain application running on a certain host type may not differ very significantly from host to host. An application which is, for instance, determined on a certain host of a certain host type to be very sensitive to the memory made available to it, it will in all likelihood not be completely insensitive to the memory made available to it on a host of a different host type. Therefore, in the absence of measurements for a certain host type, the relative weight of each resource compared to the other resources for the user application on one host type may be used in the search for a host.

In an exemplary method according to the invention, the method may further comprise grouping a plurality of different user applications into an application cluster, if for each application in said application cluster another application in that cluster can be found for which previously similar relative weights of each resource were determined on a host of the same host type as said each application.

Assuming the relative weight of each resource compared to the other resources for the user application to not change significantly from host to host, while, as described above, useful, may in some cases be too rough an approximation. However, the similarity between different applications, in so far as the relative weights of each resource for a certain host type is concerned, may provide a more accurate prediction. Therefore it may be advantageous to group applications according to this similarity.

In this exemplary method according to the invention, step i) may further comprise, if the user application has not yet been placed on any host of a given host type, using the relative weight of each resource compared to the other resources for a different user application in the same application cluster which has been placed on a host of said given host type.

If the relative weights of each resource for two different applications has been found to be similar, to within a certain error margin, for one host type, and the relative weights of each resource is only known for one of the applications on a second host type, then the relative weights of each resource for the other applications may be assumed to be similar to that of the first application for this second host type.

In an exemplary method according to the invention, the method may further comprise assigning a host cluster to an application cluster, wherein step i) comprises searching for host within the host cluster assigned to the application cluster into which the user application is clustered.

If certain applications are often placed on certain hosts, it may be advantageous to store the associations between the concerned host and application clusters, which may make the placement process more efficient.

In an exemplary method according to the invention, the method may further comprise storing in the database, for each host, the number and identity of user applications that are being executed on that host, and values for the corresponding low-level metrics for that host.

An idle host may have a certain amount of each of the resources available for applications. However, when applications are executed on a host, some of the resources are made available to the applications and may therefore be used, affecting how much of each of the resources is still available for further applications. It may therefore be advantageous to take into account which applications are already being executed on a host, as well as values for the low-level metrics for the host, as these may be representative for a current value for the availability of resources.

There are several ways to achieve this. For instance, by measuring the low-level metrics regularly, the resources which are currently available to applications may be determined, and placement may occur on the basis of these currently available resources. This means that the placement method may take into account that a host on which the application may run very well at a certain moment in time may not be a good host to execute the user application on at a later time, as the resources that may be made available to the user application may have changed in the meantime.

In an exemplary method according to the invention, the method may further comprise determining a different user application which does not compete with the user application to be placed for resources based on the determined relative weights of each resource compared to the other resources for these user applications, wherein step i) comprises searching for a host on which said different user application has been placed to place the user application.

As an example, a user application requiring a large amount of memory to be made available to it may perform well on a host with a large amount of available memory. However, for dense packing, placing only applications requiring a large amount of memory to be made available to them on this host will leave some resources largely unexploited. However, if we determine an application for which memory made available to it is not very significant, this application may be advantageously alongside the memory-intensive applications.

In an exemplary method according to the invention, the method may comprise registering changes in the placement of user applications are placed and/or the assignment of application clusters to host clusters, and decreasing the frequency of performing steps f) and g) if the registered change drops below a predefined threshold and increasing this frequency if the registered change rises above the predefined threshold.

After a certain time, provided the number of hosts in the cloud and the number of applications requesting placement does not change significantly, the system may to a certain extent stabilize. This may for instance mean that application clusters and host clusters start changing very little as more information is added to the database, and that the correspondence between application clusters and host clusters may also stabilize. As a result, placement can become more efficient. Furthermore, if this stabilization occurs, there is no longer a need to perform measurements continuously every single time a user application is executed on a host, falling back to sample based measurements and subset selection of low-level metric measurements for the applications. Instead, measurements may gradually start to be performed in a sampling manner, which may further reduce the overhead of the system. If the behavior is detected to change, the sampling rate and/or the measured set of low-level metrics may be increased again to update the database.

The invention further relates to a computer readable storage medium comprising instructions, when executed on a computer, cause the method of any of the previous claims to be performed.

The invention further relates to a system for placing a user application on a host among a plurality of hosts, said hosts being grouped into a plurality of host types, each host comprising an identical plurality of different resources, the system comprising:
a benchmark execution unit for executing a benchmark application, for each of the resources separately, on at least one host of each of the host types, which benchmark application allows the performance of the benchmark application to be evaluated as a function of the availability of that resource;
a low-level metric determination unit for determining, for each resource and host type, a low-level metric that displays substantially similar behaviour to the performance of the corresponding benchmark application as a function of the availability of that resource, while not depending substantially on the remaining resources;
a first weight determination unit for determining, for each host type, the relative weight of each resource compared to that resource on other host types, wherein the relative weight indicates the strength of that host type with respect to that resource compared to the other host types;
a database holding, for each resource and host type, the correlation between that resource and the determined low-level metric, as well as the determined relative weights;
a user application execution unit for executing the user application on at least one host of a certain host type among the plurality of hosts;
a measurement unit for performing a plurality of measurements of the performance of the user application during the execution(s) of the user application, wherein the availability of the resources varies between measurements and wherein the availability of each resource and/or the low-level metric corresponding to that resource is also measured;
a second weight determination unit for determining for the user application the relative weight of each resource compared to the other resources, based on the measurements performed by the measurement unit and the stored correlation between low-level metrics and resources for this host type, wherein the relative weight of each resource indicates the relative importance of that resource for the performance of the user application, and for storing in the database, for each user application and host type, the relative weight of each resource compared to the other resources for the user application as determined by the second weight determination unit;
a search unit for searching for a host among the plurality of hosts, based on, for each host type, the relative weight of each resource compared to that resource on other host types, and based on the relative weight of each resource compared to the other resources for the user application;

### Brief description of the figures

Some embodiments of the method and/or system according to embodiments of the present invention are now described, by way of example only, and with reference to the accompanying drawings, in which:
- Fig. 1 is an abstracted representation of a datacenter;
- Figs. 2a-2d illustrate how low-level metrics may be analyzed according to an exemplary method according to the invention;
- Fig. 3 is a flow chart depicting an exemplary method of assigning an unknown application to a host according to the invention;
- Fig. 4 is a flow chart depicting an exemplary method of assigning a known application to a host according to the invention;
- Fig. 5 is a flow chart depicting an exemplary method of assigning a known application to a host according to the invention;
- Fig. 6 is an schematic representation of the components of the system;

### Figures

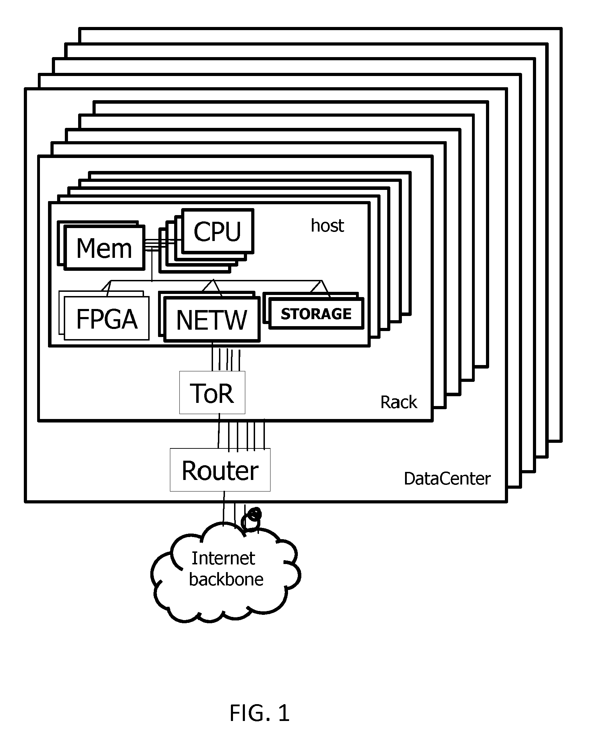

Fig. 1 depicts a schematic representation of a datacenter. The datacenter comprises several hosts, which may be grouped in racks, of which a datacenter may contain many. Each host may comprise a memory, a central processing unit (CPU), a field programmable gate array (FPGA), a network controller (NETW) and storage space. A top of rack switch (ToR) coordinates traffic to and from the host. A router coordinates traffic to and from the racks, and to and from the internet. The skilled person is aware of other possible configurations.

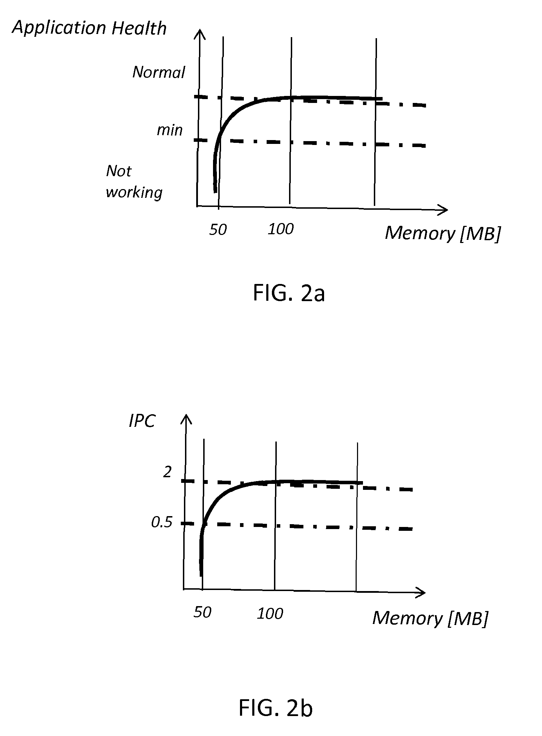

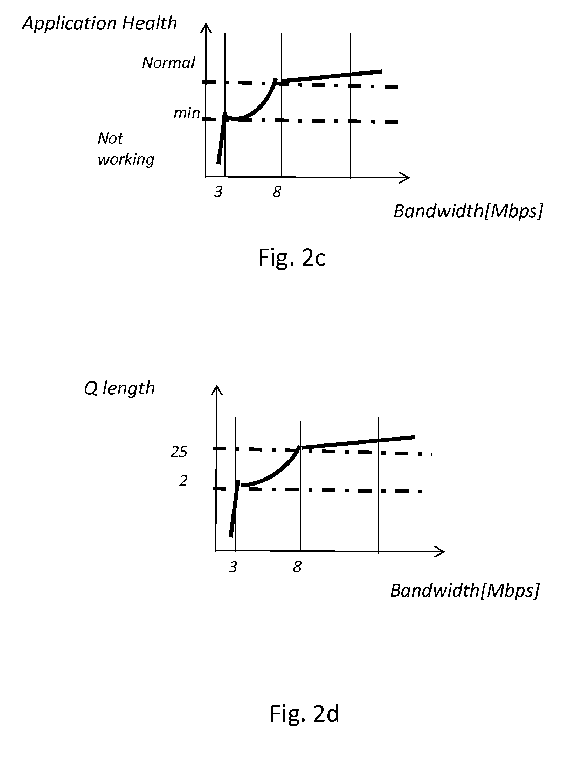

The datacenter may communicate with other datacenters for providing a system of networked computers on which one or more applications may be placed and executed. The present invention is related to a method for finding a suitable host on which an application may be executed. This method will be illustrated referring to figures 2-5, which illustrate an example in which:
- H₁ and H₂ are two hosts of a different type, where "type" may refer to differences both in hardware and in software;
- R₁ - R₃ are the three different resources, e.g. memory made available to the application, storage made available to the application, network made available to the application, etc.,of the hosts;
- T₁ - T₃ are three benchmarking applications designed to check the performance of an application as a function of R₁-R₃ respectively;
- AHM₁ - AHM₃ are application health metrics or a weighted combination of various application health metrics chosen to assess the performance of T₁-T₃ respectively. Here, the word performance covers technical performance as well as factors such as user experience. For instance, for a video streaming application, both the average number of frames per second as the minimum number of frames per second are technical factors, which both relate to user experience. Therefore an application health metric may be assembled based on certain metrics to mimic the evaluation of the application that would be given by a typical user. Alternatively, the measured average frames per second, or the minimum number of frames per second, may be used as the application health metric itself. The representation of the application health metric may be in the form of a number with or without an associated unit which may be subject to normalization.
- UA₁ and UA₂ are two user applications which may depend on more than one resource from among R₁ - R₃;
- AHM₄ and AHM₅ are application health metrics, or a weighted combination thereof, chosen to assess the performance of UA₁ and UA₂;
- LLM₁ - LLM₁₀₀ are low-level metrics, which comprises hardware performance counters, kernel metrics and/or system event metrics.

Some of the application health metrics may be the same, and it may be that on certain hosts, only a subset of the LLMᵢ may be measured.

The example below merely describes one concrete exemplary method according to the invention. The skilled person will understand that many alternatives are available that fall under the scope of the present invention.

The exemplary method according to the invention comprises three steps:
- A benchmarking process, benchmarking the various host types and/or hosts;
- An initial placement of unknown applications;
- The updating of the database, which allow for database-dependent placement.

### Benchmarking

Benchmarking is performed to populate a database with data concerning the resources available on the various hosts and how they affect application performance of the benchmarking applications. Benchmarking is performed by executing T₁-T₃ on H₁ and executing T₁-T₃ on H₂. Benchmarking is preferably performed sequentially to avoid the situation that the benchmark applications compete for resources on the same host.

During the execution of Tₙ on any one of the hosts, R₁-R₃, AHMₙ and all the available LLMᵢ for the host are measured. If AHMₙ is plotted as a function of Rₙ, the dependence of AHMₙ on Rₙ will exhibit a certain behavior. Two examples are depicted in Fig. 2a and Fig. 2c. Fig. 2a presents the application health metric as a function of available memory for the application, whereas Fig. 2b depicts a low-level metric, instructions per cycle (IPC) as a function of this same resource, available memory. Fig. 2c and 2d present corresponding figures indicating the application health versus the bandwidth, and the queue length versus the bandwidth respectively. Hence Fig. 2a presents the application health for a benchmark application which tests the memory available to the application whereas Fig. 2c presents the application health for a benchmark application which tests the bandwidth available to the application.

In advance a minimum value AHM_{n, min} corresponding to a minimal adequate performance (which may be technical performance but also user experience etc.) may have been set. After the measurements, it can be determined which minimal adequate value for the resource Rₙ, ₘᵢₙ corresponds to this value AHMₙ, ₘᵢₙ. Maximal values AHMₙ, ₘₐₓ and R _{n,max} may also be set and determined respectively, as will averages AHM_{n, avg} and Rₙ, _{avg}.

The lower dashed line in Fig. 2a and Fig. 2c indicates AHMₙ, ₘᵢₙ, respectively the minimum memory made available to the application necessary for reasonable performance and the minimum bandwidth made available to the application necessary for reasonable performance. The lower dashed line in Fig. 2b and Fig. 2d is drawn at values of the respective low-level metric, namely instructions per cycle for Fig. 2b and queue length for Fig. 2d, for the determined the minimum memory made available to the application necessary for reasonable performance and the minimum bandwidth made available to the application necessary for reasonable performance, respectively.

As will often happen, the application health will level off as a function of the resource for a certain value. This is because most applications, for instance, only need a certain amount of memory or bandwidth made available to them. The higher dashed line in Figs. 2a and 2c indicates at which value of application health this is found to occur. A corresponding value of the resource may be established, and through Fig. 2b and 2d, a corresponding value of the relevant low-level metric as well.

The measured LLMᵢ may also be plotted as a function of Rₙ, as well as as functions of Rₘ (where m≠n). Normalizing both the AHMₙ (Rₙ) and the LLMᵢ (Rₙ) plots makes it possible to compare the behavior of application health as a function of the targeted resource with the behavior of the low-level metrics as a function of this resource, for instance using a least squares method. Some low-level metrics will emerge whose behavior closely tracks with the behavior of application health for this resource.

Fig. 2b depicts that the low-level metric instructions per cycle (IPC), as a function of a resource, namely memory made available to the application, presents similar behavior to the application health metric as a function of this resource. Therefore, if IPC is found to not significantly depend on the other resources, it may be a useful low-level metric to measure to ascertain how much available memory there is later for this particular host type. Likewise, Fig. 2d depicts that that low-level metric queue length (Q length), as a function of another resource, namely bandwidth made available to the application, presents similar behavior to the application health metric as a function of this resource. Therefore, if queue length is found to not depend significantly on the other resources (including memory made available to the application), queue length may be said be representative of bandwidth made available to the application for this particular host type.

Thus, by examining the behavior of these low-level metrics as a function of the two other resources, one or several low-level metrics may be chosen for which:
- their behavior on this host closely tracks with application health for this resource
- their behavior is not significantly impacted by changes in the other resources.

As such, it can be concluded that such a low-level metric is an indication of application health for the relevant resource.
For the sake of simplicity, on H₁, LLM₁, when executing T₁, resembles AHM₁ for R₁ but does not depend significantly on R₂ or R₃; LLM₂, when executing T₂, resembles AHM₂ for R₂ but does not depend significantly on R₁ or R₃; and LLM₃, when executing T₃, resembles AHM₃ for R₃ but does not depend significantly on R₁ or R₂. On H₂, LLM₁ also, when executing T₁, resembles AHM₁ for R₁ but does not depend significantly on R₂ or R₃; LLM₂ also, when executing T₂, resembles AHM₂ for R₂ but does not depend significantly on R₁ or R₃; but, in contrast with what was found on H₂, it is LLM₄ which, after executing T₃, resembles AHM₃ for R₃ but does not depend significantly on R₁ or R₂.

The absolute measured values of the low-level metrics may also be recorded and compared. For instance, it may be found that the average values of the low-level metrics found during the benchmarking process are:

| H₁ | | H₂ | |
|---|---|---|---|
| LLM₁ | 75 | LLM₁ | 60 |
| LLM₂ | 80 | LLM₂ | 40 |
| LLM₃ | 40 | LLM₄ | 1000 |

These values are chosen for exemplary purposes and are not reflective of what will be measured in practice.

From this table, it can be established that an application which depends highly on R₂ will in all likelihood perform better on H₁ than on H₂; and that an application which depends highly on R₂ will perform significantly better on H₁ than on H₂ when it comes to R₂. Because different LLMₙ have been found to reflect R₃ on the various hosts, it is difficult to compare both host types based on the absolute value of the low-level metrics LLM₃ and LLM₄. However, a comparison may be made if these metrics are normalized. Assuming the resource in question is bandwidth, LLM₃ may be queue length, and LLM₄ may be actual network buffer size. For instance, LLM₃ may be normalized based on a predefined normalization factor which is generally different for the different LLM_{i,} to 0.4, while LLM₄ may be normalized with a different normalization factor to 0.8, which means that applications which largely depend on R₃ will perform better on H₂ than on H₁.

To better assess how well these hosts do when it comes to the various resources, comparison to a reference host may also be made.

| Reference | |
|---|---|
| LLM₁ | 50 |
| LLM₂ | 50 |
| LLM₃ | 50 |
| LLM₄ | 2000 |

In this particular example, both H₁ and H₂ are apparently good, as compared to the reference host, when it comes to R₁, H₁ is better and H₂ is worse than the reference host when it comes to R₂; and neither host is very good in comparison to the reference host when it comes to R₃.

In this manner, a host profile may be assembled. In this host profile, the correspondences between low-level metrics and resources are stored, as are indicators of the relative strength of resources for this host: for instance, one host may do very well when it comes to memory, but fare worse when it comes to networking capabilities. Absolute values of resources and/or corresponding low-level metrics may also be stored.

The information regarding the host obtained during the benchmarking process can be stored in a database and may be referred to as a host profile. This information includes the information about how the selected low-level metrics depend on the resources. In particular, what was measured is the correlation between LLMₙ and Rₙ. This will be useful later, since with the help of the inverse function, this will allow to determine the value of a resource based on the measured low-level metric, in case the resource may not be determined directly.

After the benchmarking process, a database is populated with information about the performance of H₁ and H₂ and the resources they have. Next, the performance of user applications are tested on these hosts.

### Placement of a first user application on a first host

A user application typically depends on a plurality of resources from among R₁-R₃.

A first user application UA₁ requests placement. UA₁ is at this point an unknown application. An example of how an unknown application may be placed is depicted in Fig. 3. Since at this point nothing is known about the application, it may be placed on any available host (S1), whether at random or according to other considerations. Initially, UA₁ is preferably placed on an idle host. In this example, H₁ is chosen.

While the user application is being executed (S2), all possible LLMᵢ are measured, as is AHM₄. If possible, R₁-R₃ are also measured, though this may in many cases not be feasible. Instead, the LLM may be used to determine the values of R₁-R₃ indirectly (S3). The measurements are then analyzed (S4)

The test applications T₁-T₃ were expressly designed so that the application health metric for a given test application depended on a single resource, in other words AHM₁ depended solely on R₁, with no significant dependence on R₂ and R₃, and so on. The user application, on the other hand, may depend on all three resources, AHM₄(R₁, R₂, R₃). The application health metric for the user application can be considered a weighted sum of the application health metrics corresponding to the benchmark applications, AHM₄(R₁, R₂, R₃) = n₁ f₁(R₁) + n₂ f₂(R₂) + n₃f₃(R₃). The n₁-n₃ are as of yet unknown weight factors. The functions are known, as they are the functions found for the application health metrics of the test application as a function of the corresponding resource, AHMₙ(Rₙ), for T₁-T₃ (where n = 1, 2, 3). The values of Rₙ may be measured, or, if this is not possible, be calculated from the measured values of LLMₙ, and hence the weight factors may be calculated. For this calculation, several measurements may be used, for instance measurements separated in time, or on different hosts belonging to the same host type. If insufficient variation of resources is determined (S8), the resource may also be modified (S9) manually to provide a plurality of different measurement points. The distribution may also be recorded in the host profile as weights for low-level metrics, which have the advantage of usually being directly measurable: in that case, AHM₄(LLM₁, LLM₂,LLM₃) = m₁LLM₁+m₂LLM₂+m₃LLM₃, and the weights m₁:m₂:m₃ are representative for the performance of this application on this host.

The calculated values n₁:n₂:n₃, where ∑nᵢ = 1, or alternatively m₁:m₂:m₃, are stored (S10) into a host-dependent application profile (S7). These n and m indicate the relative importance of the various resources (S5). For instance, an application where the respective weights n₁:n₂:n₃ are 0.1:0.8:0.1 will have an application health which is highly dependent on R₂ but not very dependent on R₁ and R₃. It may therefore perform well on a host with good results when it comes to R₂.

### Placement of the first user application on a second host.

If the UA₁ requests placement a second time, it may be advantageous, in the context of acquiring more information, to place it on a different host, H₂.

The same process as described above may then be performed, though here with LLM₄ being representative for R₃ as opposed to LLM₃. As a result, another set n₁:n₂:n₃ and/or m₁:m₂:m₃ of weights will be acquired. It is likely that this will bear at least some resemblance to the previously acquired set, as the importance of a resource will in most cases not vary significantly from host to host. However, this need not always be the case.

### Placement of a second application on the first host.

If a second user application UA₂, which is as of yet unknown to the system, requests placement, it will, as UA₁ originally was, be assigned to a host, H₁. The same process is performed, yielding weights n₁:n₂:n₃ and/or m₁:m₂:m₃. These weights may be completely different from those calculated for UA₁ on H₁. However, in what follows, it has been assumed that the values calculated for UA₂ on H₁are similar to within a certain error margin to the values calculated for UA₁ on H₁.

As a part of the establishing of a host-dependent application profile, similarities may be determined to existing host-dependent application profiles (S6). In this example, the similarity between the host-dependent application profiles for UA₁ and UA₂ may be stored in both the host-dependent application profiles. It may also be said that UA₁ and UA₂ belong to an application cluster. An application cluster comprises applications for which the performance on the different host types can be considered equivalent to a certain extent, for instance if UA₁ has been executed on host H₁ and H₂, and UA₂ has been executed on H₁ an H₃, and UA₃ on H₃, and the ratio of resource determined for UA₁ on H₁ closely resembles the ratio of resources of UA₂ on H₁, and the ratio of resources determined for UA₂ on H₃ closely resembles the ratio of resources determined for UA₃ on H₃, then UA₁, UA₂ and UA₃ may be clustered together in one application cluster (S13). By clustering the application based on the relative resources used on certain hosts, it is no longer necessary to test each application on each host type.

### Placement

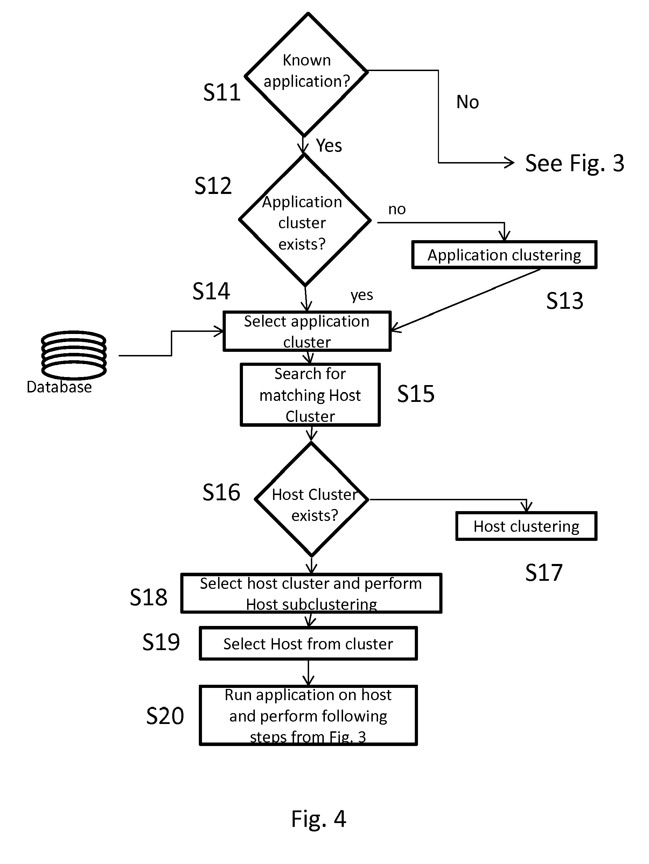

In practice, there will of course be many more hosts and many more user applications. However, in this example case with only two hosts, sufficient information for database-dependent placement has now been collected, UA₁ and UA₂ can be seen as known applications, and a procedure such as the one depicted in Fig. 4 may be followed.

If UA₁ requests placement, it will be detected that application profiles exist for this application, and thus that this is a known application (S11). In these application profiles, it may for example be the case that R₂ has been found, for both hosts, to be very influential on application health. Furthermore, it may be established whether an application cluster exists for this application (S12). If it does not, application clustering may be performed at this stage (S 13), and the resulting application cluster may be selected (S14). If it does already exist, the application cluster to which the application belongs may be selected (S14).

The database of host types will now be searched to ascertain which hosts perform above a certain threshold for this resource, i.e. which host cluster matched the application cluster (S15). For instance, host clustering (S17) may be performed, whereby hosts for which it has been determined that R₂ is better than a certain threshold, for instance the value for the reference host, are clustered together. A cluster of host which exceed this threshold for R₂ may also have been established in the past (S16), in which case the existing cluster may be selected. In this example, this already brings the selection to H₁. However, in practice, many more hosts are present, and this cluster will contain a plurality of hosts. Within this cluster, subclustering (S18) may then take place on the basis of the second most important resource, for instance R₁. Among the hosts in the cluster or subcluster, further selection may take place. If placement takes place in a cloud with a plurality of active hosts on which a plurality of applications is already being executed, the selection may for instance be on the basis of which hosts are already active at this time.

If other applications are already being performed on H₁ and H₂, this may affect the placement decision. Several ways of taking this into account are possible. In an advantageous embodiment, the database is updated with information about which applications are being executed on which hosts, and preferably with current information about the currently available resources. For instance, H₁ may, if no other applications are currently running, be the optimal host for UA₁, since it has good values for R₂. However, if other instances of UA₁, or other applications for which R₂ is important, are already being executed on H₁, it may have less of resource R₂ available for a new application. In these cases, if highest possible application health is the main object of the placement, assigning UA₁ to H₂ may be preferable, and may result from the above-described process.

Another consideration may be the desire for dense cloud packing, i.e. the desire to perform as many applications as possible on as few hosts as possible. This may be achieved using the above method, but also for example by selecting (for instance from a first cluster selected on the basis of a minimum resource threshold) hosts on which certain applications are currently being executed which can be said to be very "complementary" to the application currently requesting placement. Complementarity in this context entails that different resources are important. For instance, an application UA₁ with a 0.1:0.8:0.1 resource weight distribution and an application UAₙ with a 0.6:0.1:0.3 resource weight distribution can be said to have a fairly high degree of complementarity, as they will not "compete" for each other's resources. Information about the degree of complementarity between different applications or between different application clusters may be stored in the database. It may therefore be advisable, when placing UA₁ in a dense cloud packing contest, to search the database for hosts on which UAₙ is currently being executed, to check whether these hosts have sufficient available resources to execute UA₁ at an acceptable level, and to select a host (S19) on this basis. Once a host is selected, the application is executed on the selected host, and a procedure like the one described in previous steps is performed to ascertain the relative weights of resources (S20)

If UA₂ requests placement, the weights are not known for the second host. In fact, in practice, it is much too much work to assemble an application profile for each combination of application and host. However, application clustering (S13) may be done, wherein application which have yielded similar application profiles on at least one same hosts are clustered together as being "similar". Assuming that UA₁ and UA₂ have yielded similar profiles relating to execution on H₁, the application profile created when UA₁ was performed on H₂ may be seen as indicative for the application profile that would have been created had UA₂ been executed on H₂. Clustering the applications in this way entails that satisfactory placement may be performed on the basis of deduction guessing without having to test every single application on every single host.

Furthermore, when performing the selection of hosts, certain hosts may frequently "end up" in the same cluster, because they are similar for many of the resources. It may be useful to cache these existing clusters, such that in the placement process, not every host needs to be checked.

Clustering of hosts may also occur in the background, i.e. not in response to a specific placement request, for example to identify hosts which are similar for at least two resources.

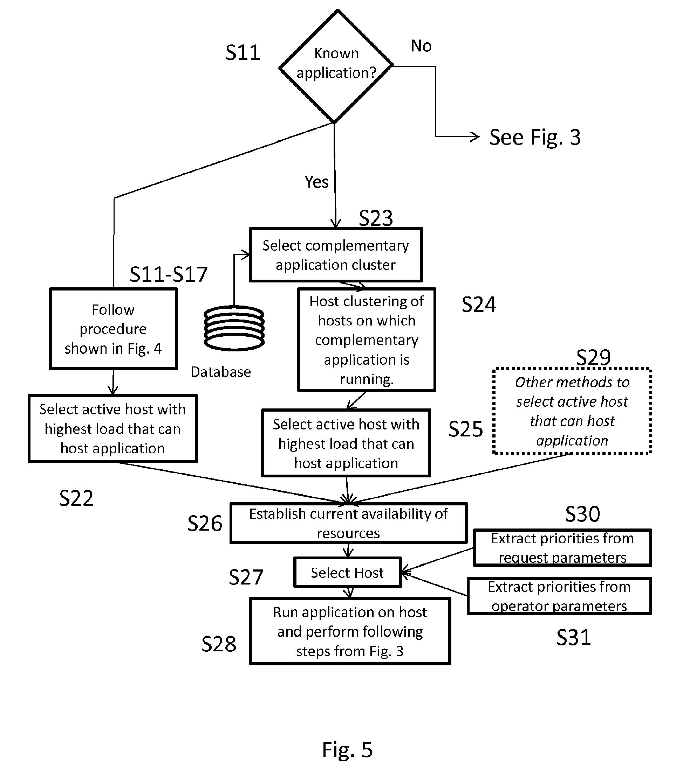

After a certain number of user applications has been placed and executed on a certain number of hosts, the placement procedure may grow increasingly more sophisticated. For instance, as depicted in Fig. 5, several paths may be followed. The leftmost path is largely similar to the procedure described above (S 11-S 17), wherein hosts are clustered, for example on the basis of which resource has been determined to be important for a user application requesting placement, and an active host with sufficient remaining resources is selected from among the determined cluster.

However, a different path may also be followed. This path may be followed simultaneously, but also sequentially. In this path, based on the established resource weights for the user application requesting placement, a cluster of complementary applications, i.e. applications for which the resources to which the user application requesting placement does not matter significantly and vice versa, may be selected (S23). Hosts may then be clustered on the basis of which hosts are running at least one application from among the complementary application cluster at that time (S24). An active host with sufficient remaining resources is selected from among the determined cluster may also be selected from among this host cluster.

Other paths may also be followed (S29), yielding at least one, and in most cases several, candidate hosts to place the user application on. The current availability of resources is then established for the candidate hosts (S25), and one of the candidate hosts is selected (S27), for example based on external priorities which may be set by either the user requesting placement (S30), by the operator of the cloud (S31), or by both. The user application is then executed on the selected host, and measurements may be performed to establish relative weights and other factors and to update the database.

If a host of an unknown host type is added to the cloud, benchmarking should take place to ascertain the relevant data for this new host type, for instance which low-level metrics are representative for the resources and how well the new host type does when it comes to the various resources.

One advantage of the current invention may be that as more and more applications are placed, the database is populated with more and more information, and placement may therefore become increasingly sophisticated. Furthermore, provided the number of hosts in the cloud and the number of applications requesting placement does not change significantly, the system will to a certain extent stabilize after a certain amount of time has passed. This may for instance mean that application clusters and host clusters start changing very little as more information is added to the database, and that the correspondence between application clusters and host clusters may also stabilize. As a result, placement can become more efficient. Furthermore, if this stabilization occurs, there is no longer a need to perform measurements continuously every single time a user application is executed on a host, falling back to sample based measurements and subset selection of low-level metric measurements for the applications. Instead, measurements may gradually start to be performed in a sampling manner, which may further reduce the overhead of the system. If the behavior is detected to change, the sampling rate and/or the measured set of low-level metrics may be increased again to update the database.

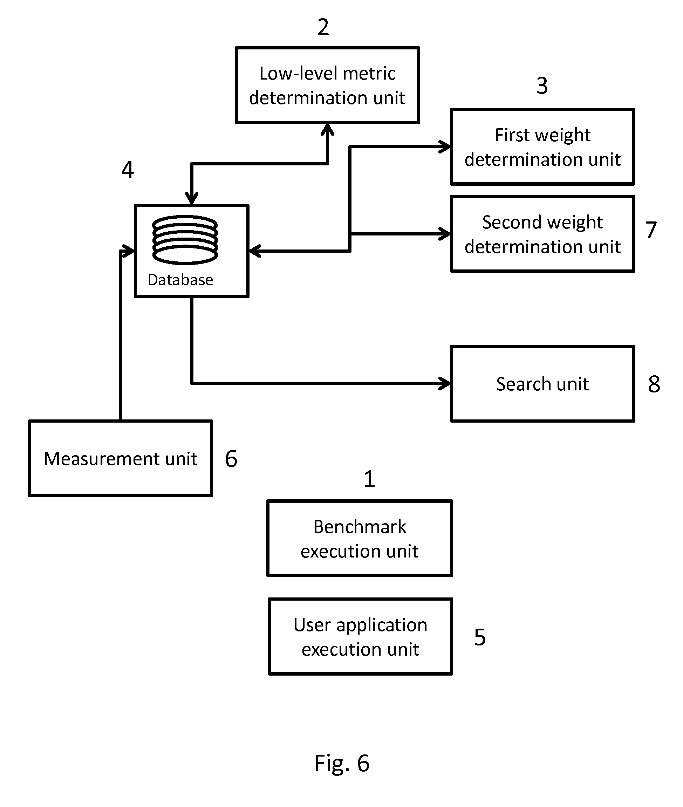

The components of the system are depicted in Fig. 6. A benchmark execution unit (1) executes a plurality of benchmark applications on a plurality of hosts, and during this execution, factors such as low-level metrics, application health and resources may be measured, for instance by the measurement unit (6). Based on the measurements, a low-level determination unit (2) may determine which low-level metric displays substantially similar behavior to the performance of the corresponding benchmark application as a function of the availability of a certain resource, while not depending substantially on the remaining resources. A first weight determining unit (3) may use the determined low-level metrics to determine, for each host type, the relative weight of each resource compared to that resource on other host types. These relative weights, as well as other measured and determined factors, may be stored in a database (4). Once sufficient information is collected in the benchmarking process, a user application may be executed by the user application execution unit (5), and the measurement unit (6) may measure many different factors, for instance low-level metrics. A second weight determination unit (7) may, on the basis of these measurements and potentially other information in the database (4), determine the relative weights of each resource compared to the other resources. A search unit (8) may then search for an appropriate host to place a certain application on the basis of the information collected in the database (4).

## Claims

1. A method for placing a user application on a host among a plurality of hosts, said hosts being grouped into a plurality of host types, each host comprising a plurality of different resources, the method comprising:
a) for each of the resources separately, executing a benchmark application on at least one host of each of the host types, which benchmark application allows the performance of the benchmark application to be evaluated as a function of the availability of that resource;
b) for each resource and host type, determining a low-level metric that displays substantially similar behavior to the performance of the corresponding benchmark application as a function of the availability of that resource, while not depending substantially on the remaining resources;
c) for each host type, determining the relative weight of each resource compared to that resource on other host types, wherein the relative weight indicates the strength of that host type with respect to that resource compared to the other host types;
d) for each resource and host type, storing in a database the correlation between that resource and the determined low-level metric, as well as the determined relative weights;
e) executing the user application on at least one host of a certain host type among the plurality of hosts;
f) perform a plurality of measurements of the performance of the user application during the execution(s) of the user application, wherein the availability of the resources varies between measurements and wherein the availability of each resource and/or the low-level metric corresponding to that resource is also measured;
g) determining for the user application the relative weight of each resource compared to the other resources, based on the measurements performed in step f) and the stored correlation between low-level metrics and resources for this host type, wherein the relative weight of each resource indicates the relative importance of that resource for the performance of the user application;
h) for each user application and host type, storing in the database the relative weight of each resource compared to the other resources for the user application;
i) for a subsequent placement of the user application, searching for a host among the plurality of hosts, based on, for each host type, the relative weight of each resource compared to that resource on other host types, and based on the relative weight of each resource compared to the other resources for the user application;
j) executing the user application on the host found under step i);
k) performing steps f)-j) during further subsequent execution of the user application.

2. The method according to claim 1, wherein step g) comprises:
approximating the measured performance of the user application as a function of the plurality of resources by a weighted sum of benchmark application performances for said plurality of resources, wherein the benchmark application performances are approximated by the measured corresponding low-level metrics as determined in step b); and
determining weighting coefficients for each of the benchmark application performances using the measurements performed in step f);
wherein said relative weights of each resource correspond to the determined weighting coefficients.

3. The method according to claim 1 or 2, wherein step f) comprises a predefined limiting of the availability of one or more resources to the user application.

4. The method according to any of the previous claims, wherein step i) comprises placing the user application on a host of a host type on which the user application has not yet been placed.

5. The method according to any of the previous claims, wherein step i) comprises determining at least one resource among the plurality of resources for which the performance of the user application is relatively sensitive, and ranking the different host types based on the relative weight of such resource compared to that resource on other host types.

6. The method according to claim 5, wherein step i) further comprises clustering the top-ranked host type(s) into a host cluster and searching for an available host in said host cluster for placing the user application.

7. The method according to claim 5 or 6, wherein said searching for an available host in said host cluster comprises searching for a host which already has at least one other user application placed in order to obtain a dense packing of user applications.

8. The method according to any of the previous claims, wherein step i) comprises:
if the user application has not yet been placed on any host of a given host type, using the relative weight of each resource compared to the other resources for the user application as determined for a host of a different host type on which the user application has been placed.

9. The method according to any of the previous claims, further comprising grouping a plurality of different user applications into an application cluster, if for each application in said application cluster another application in that cluster can be found for which previously similar relative weights of each resource were determined on a host of the same host type as said each application, wherein step i) preferably comprises: if the user application has not yet been placed on any host of a given host type, using the relative weight of each resource compared to the other resources for a different user application in the same application cluster which has been placed on a host of said given host type.

10. The method according to claim 9 and claim 6, further comprising assigning a host cluster to an application cluster, wherein step i) comprises searching for host within the host cluster assigned to the application cluster into which the user application is clustered.

11. The method according to any of the previous claims, further comprising storing in the database, for each host, the number and identity of user applications that are being executed on that host, and values for the corresponding low-level metrics for that host.

12. The method according to any of the previous claims, further comprising determining a different user application which does not compete with the user application to be placed for resources based on the determined relative weights of each resource compared to the other resources for these user applications, wherein step i) comprises searching for a host on which said different user application has been placed to place the user application.

13. The method according to any of the previous claims, comprising registering the changes in the placement of user applications are placed and/or the assignment of application clusters to host clusters, and decreasing the frequency of performing steps f) and g) if the registered change drops below a predefined threshold and increasing this frequency if the registered change rises above the predefined threshold.

14. A computer readable storage medium comprising instructions, when executed on a computer, cause the method of any of the previous claims to be performed.

15. A system for placing a user application on a host among a plurality of hosts, said hosts being grouped into a plurality of host types, each host comprising a plurality of different resources, the system comprising:
a benchmark execution unit for executing a benchmark application, for each of the resources separately, on at least one host of each of the host types, which benchmark application allows the performance of the benchmark application to be evaluated as a function of the availability of that resource;
a low-level metric determination unit for determining, for each resource and host type, a low-level metric that displays substantially similar behaviour to the performance of the corresponding benchmark application as a function of the availability of that resource, while not depending substantially on the remaining resources;
a first weight determination unit for determining, for each host type, the relative weight of each resource compared to that resource on other host types, wherein the relative weight indicates the strength of that host type with respect to that resource compared to the other host types;
a database holding, for each resource and host type, the correlation between that resource and the determined low-level metric, as well as the determined relative weights;
a user application execution unit for executing the user application on at least one host of a certain host type among the plurality of hosts;
a measurement unit for performing a plurality of measurements of the performance of the user application during the execution(s) of the user application, wherein the availability of the resources varies between measurements and wherein the availability of each resource and/or the low-level metric corresponding to that resource is also measured;
a second weight determination unit for determining for the user application the relative weight of each resource compared to the other resources, based on the measurements performed by the measurement unit and the stored correlation between low-level metrics and resources for this host type, wherein the relative weight of each resource indicates the relative importance of that resource for the performance of the user application, and for storing in the database, for each user application and host type, the relative weight of each resource compared to the other resources for the user application as determined by the second weight determination unit;
a search unit for searching for a host among the plurality of hosts, based on, for each host type, the relative weight of each resource compared to that resource on other host types, and based on the relative weight of each resource compared to the other resources for the user application;
